# EUROPEAN PATENT SPECIFICATION

(11) **EP 3 904 256 B1**
(45) Date of publication and mention of the grant of the patent: **03.12.2025**
(21) Application number: 20172428.3
(22) Date of filing: 30.04.2020
(51) Int. Cl.: B66B 1/34, B66B 19/00

(54) **ELEVATOR SYSTEM**
AUFZUGSYSTEM
SYSTÈME D'ASCENSEUR

(43) Date of publication of application: 03.11.2021
(73) Proprietor: KONE Corporation, 00330 Helsinki (FI)
(72) Inventor: Kattainen, Ari, 00330 Helsinki (FI); Aitamurto, Juha-Matti, 00330 Helsinki (FI)
(74) Representative: Papula Oy

(56) References cited:
- JP-A- H10 203 746
- US-A1- 2006 198 389
- US-A1- 2010 147 630
- US-A1- 2011 120 808
- US-A1- 2017 001 841

## Description

### TECHNICAL FIELD

The present application relates to the field of elevator systems.

### BACKGROUND

In modern elevator system, more and more data is sent and received by different entities of an elevator system. For example, an elevator controller may receive information from call buttons and then control an elevator drive to serve calls, or the elevator controller may receive information from a safety circuit and then based on this information control one or more entities of the elevator system. These are only some possible examples of situations where information is received and/or sent within an elevator system.

It is characteristic for the modern elevator systems that an elevator system may comprise multiple different internal data transmission solutions. This may mean that multiple different communication stacks and multiple different physical layers may be used simultaneously. The use of multiple different internal data transmission solutions may result in a complicated and inefficient solution. Further, when serial communication is used in an elevator communication system, it is important to be able to configure elements and system nodes in the elevator communication system easily and reliably.

Traditionally, when a safety contact in an elevator safety chain opens, only the combined status of all series-connected safety contacts is known. In other words, it is not known which one of the safety contacts has opened, let alone the physical location of the opened safety contact.

US 2017/001841 A1 teaches a configuration method for operating panels of an elevator system.

US 2006/198389 A1 teaches a solution for multi-drop networking of devices.

On the other hand, it would useful to identify the location of the opened safety contact, for example, to know which landing door has opened.

Thus, it would be beneficial to have a solution that would alleviate at least one of these drawbacks.

### SUMMARY

According to a first aspect, there is provided a method for setting up an elevator safety system. The elevator safety system comprises means for determining a floor position of an elevator car, a data bus, a safety controller configured to communicate via the data bus, a plurality of elevator system nodes configured to communicate via the data bus, a plurality of safety sensors disposed at different landing floors and configured to indicate a status of a landing door. Each of the plurality of elevator system nodes is associated with a safety sensor and configured to communicate the status of the safety sensor to the safety controller via the data bus. The method comprises for each elevator landing: a) operating the elevator car in a setup mode; b) stopping the elevator car at an elevator landing; c) opening, by a door operator, a landing door of the elevator landing at least partially to generate a change in the status of the safety sensor disposed at the landing floor; d) detecting, with the elevator system node associated with the safety sensor, the change in the status of the safety sensor; e) communicating with the elevator system node associated with the safety sensor the changed status to the safety controller via the data bus; and f) linking, in a memory of the safety controller, an address associated with the elevator system node with a floor position determined by the means for determining the floor position of the elevator car, wherein when all landing floors have been gone through, the memory stores floor positions for all safety sensors.

In an implementation form of the first aspect, the data bus comprises an ethernet bus.

In an implementation form of the first aspect, the elevator communication system further comprises at least one multi-drop ethernet bus segment communicatively connected to the data bus and wherein the data bus comprises a point-to-point ethernet bus, wherein at least one of the elevator system nodes is communicatively connected to the point-to-point ethernet bus via the at least one multi-drop ethernet bus segment.

According to a second aspect, there is provided an elevator system for setting up an elevator safety system. The elevator safety system comprises means for determining a floor position of an elevator car, a data bus, a safety controller configured to communicate via the data bus, a plurality of elevator system nodes configured to communicate via the data bus, a plurality of safety sensors disposed at different landing floors and configured to indicate a status of a landing door. Each of the plurality of elevator system nodes is associated with a safety sensor and configured to communicate the status of the safety sensor to the safety controller via the data bus. For each landing, the elevator controller is configured to operate the elevator car in a setup mode, stop the elevator car at an elevator landing and cause opening by a door operator of a landing door of the elevator landing at least partially to generate a change in the status of the safety sensor disposed at the landing floor; the elevator system node associated with the safety sensor is configured to detect the change in the status of the safety sensor and communicate the changed status to the safety controller via the data bus; and the safety controller is configured to link in a memory of the safety controller an address associated with the elevator system node with a floor position determined by the means for determining the floor position of the elevator car, wherein when all landing floors have been gone through, the memory stores floor positions for all safety sensors.

In an implementation form of the second aspect, the data bus comprises an ethernet bus.

In an implementation form of the second aspect, the elevator communication system further comprises at least one multi-drop ethernet bus segment communicatively connected to the data bus and wherein the data bus comprises a point-to-point ethernet bus, wherein at least one of the elevator system nodes is communicatively connected to the point-to-point ethernet bus via the at least one multi-drop ethernet bus segment.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**FIG.** 1A illustrates an elevator communication system according to an example embodiment.
FIG. 1B illustrates an elevator communication system according to another example embodiment.
FIG. 2 illustrates a method for setting up an elevator safety system according to an example embodiment.

### DETAILED DESCRIPTION

In an example embodiment, the various embodiments discussed below may be used in an elevator system comprising an elevator that is suitable and may be used for transferring passengers between landing floors of a building in response to service requests. In another example embodiment, the various embodiments discussed below may be used in an elevator system comprising an elevator that is suitable and may be used for automated transferring of passengers between landings in response to service requests.

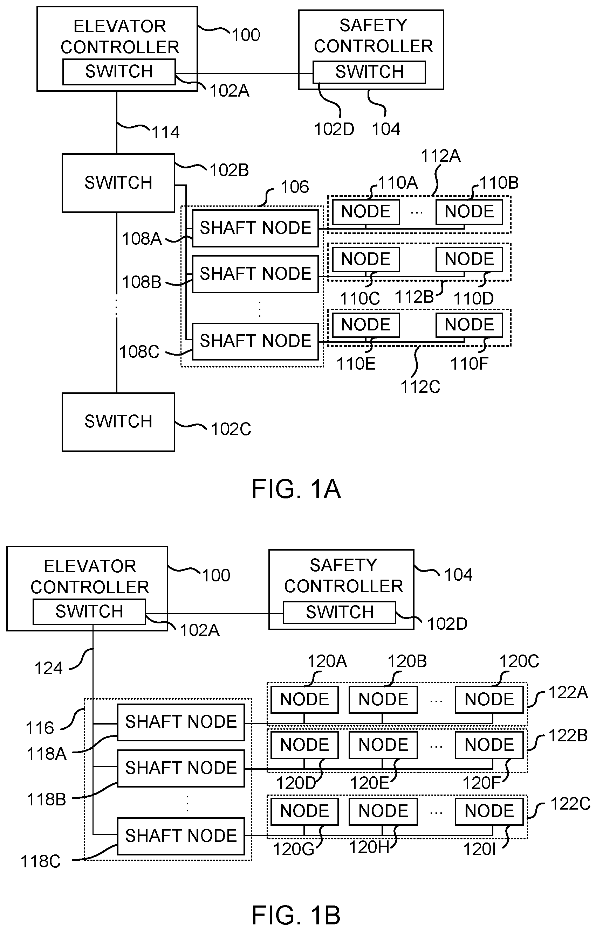

FIG. 1A illustrates an elevator communication system according to an example embodiment. The elevator communication system comprises an elevator controller 100. The elevator communication system may further comprise one or more multi-drop ethernet bus segments 112A, 112B, 112C reachable by the elevator controller 100, and a plurality of elevator system nodes 108A-108C, 110A-110F configured to communicate via the multi-drop ethernet bus segments 112A, 112B, 112C wherein the elevator controller 100 is reachable by the elevator system nodes 110A-110F via the multi-drop ethernet bus segments 112A, 112B, 112C.

In an example embodiment, the elevator communication system may comprise a point-to-point ethernet bus 14 and at least one connecting unit 102A, 102C comprising a first port connected to the multi-drop ethernet bus segment 106 and a second port connected to the point-to-point ethernet bus 114. Thus, by using the connecting units 102B, 102C one or more multi-drop ethernet bus segments 106 may be connected to the point-to-point ethernet bus 114. The connecting unit 102B, 102C may refer, for example, to a switch. Similarly, the elevator controller 100 may comprise a switch 102A, which connects the elevator controller 100 to the point-to-point ethernet bus 114. The point-to-point ethernet bus 114 may be, for example, 100BASE-TX or 10BASET1L point-to-point ethernet bus. The multi-drop ethernet bus segments 106, 112A, 112B, 112C may comprise, for example, 10BASE-T1S multi-drop ethernet bus.

The elevator communication system may comprise a safety controller 104. The safety controller 104 may be connected to the point-to-point ethernet bus 114 via a connecting unit 102D. This means that the elevator system nodes 108A-108C, 110A-110F may send information to the elevator safety controller 100 and vice versa via the common point-to-point ethernet bus 114. For example, the elevator system nodes 108A-108C, 110A-110F may send information, for example, from sensors or fixtures to the elevator controller 114 or the safety controller 104 and receive information therefrom to control, for example, actuators configure fixtures etc. At least some of the elevator system nodes 108A-108C, 110A-110F may be safety nodes in accordance with IEC61508 SIL level 3, having a safety processing unit and a separate communication controller. Data of the safety processing unit may be sent only to the safety controller 104. The safety nodes may be configured to interface with elevator safety devices, such as safety sensors or safety contacts indicating elevator safety, e.g. landing door contacts, door lock contacts, contact of overspeed governor, buffer contacts etc. The safety nodes may be configured to communicate with the elevator safety controller 104. To establish safe communication, different kind of data checks, such as checksums, error detection and/or correction algorithms etc. may be used in the communication.

In an alternative embodiment, the elevator controller 100 could be connected directly to the multi-drop ethernet bus 114. Alternatively or additionally, the safety controller 104 may be integrated into the same control unit with the elevator controller 100.

As illustrated in FIG. 1A, the shaft nodes 108A, 108B, 108C interconnect the shaft segment 106B to which the shaft nodes 108A, 108B, 108C are connected to and the landing segments 112A, 112B, 112C. In other words, the shaft nodes 108A, 108B, 108C may comprise or may act as a switch to the landing segments 112A, 112B, 112C. This may enable a simple solution for adding new elevator system nodes to the elevator communication system. This may also enable a solution in which a single elevator system node may act as a switch or a repeater to another multi-drop ethernet bus segment to which nearby elevator system elements, for example, a call button or buttons, a display or displays, a destination operating panel or panels, a camera or cameras, a voice intercom device etc.

In an example embodiment, an elevator system node 110A-110F may be configured to interface with at least one of an elevator fixture, an elevator sensor, an elevator safety device, and an elevator control device. Further, in an example embodiment, power to the nodes may be provided with the same cabling.

FIG. 1B illustrates an elevator communication system according to another example embodiment. The elevator communication system comprises an elevator controller 100. The elevator communication system may further comprise a multi-drop ethernet bus 124 comprising a multi-drop ethernet bus segment 116 (for example, in the form of 10BASE-T1S) forming a shaft segment reachable by the elevator controller 100. The shaft segment 116 comprises shaft nodes 118A, 118B, 118C configured to communicate via the multi-drop ethernet bus segment 116.

Elevator system nodes 120A, 120B, 120C, i.e. landing nodes, are connected to a multi-drop ethernet bus segment 122A, i.e. to a landing segment. Similarly, elevator system nodes 120D, 120E, 120F are connected to a multi-drop ethernet bus segment 122B, and elevator system nodes 120G, 120H, 120I are connected to a multi-drop ethernet bus segment 122C. Landing nodes that are coupled to the same multi-drop ethernet bus segment may be configured so that one landing node is to be active at a time while the other landing nodes of the same multi-drop ethernet bus segment are in a high-impedance state.

In an example embodiment, the landing node 120A-120I may be configured to interface with at least one of an elevator fixture, an elevator sensor, an elevator safety device, and an elevator control device. Further, in an example embodiment, power to the nodes may be provided with the same cabling.

The elevator communication system may comprise a safety controller 104. The safety controller 104 may be connected to the elevator controller 100. For example, the elevator system nodes 118A-118C, 120A-120I may send information, for example, from sensors or fixtures to the elevator controller 104 or the safety controller 104 and receive information therefrom to control, for example, actuators configure fixtures etc. At least some of the elevator system nodes 118A-118C, 120A-120I may be safety nodes in accordance with IEC61508 SIL level **3,** having a safety processing unit and a separate communication controller. Data of the safety processing unit may be sent only to the safety controller 104. The safety nodes may be configured to interface with elevator safety devices, such as safety sensors or safety contacts indicating elevator safety, **e.g.** landing door contacts, door lock contacts, contact of overspeed governor, buffer contacts etc. The safety nodes may be configured to communicate with the elevator safety controller 104. To establish safe communication, different kind of data checks, such as checksums, error detection and/or correction algorithms etc. may be used in the communication. In another example embodiment, the safety controller 104 may be integrated into the same control unit with the elevator controller 100.

As illustrated in FIG. 1B, the shaft nodes 118A, 118B, 118C interconnect the shaft segment 116 to which the shaft nodes 118A, 118B, 118C are connected to and the landing segments 122A, 122B, 122C. In other words, the shaft nodes 118A, 118B, 118C may comprise or may act as a switch to the landing segments 122A, 122B, 122C. This may enable a simple solution for adding new elevator system nodes to the elevator communication system. This may also enable a solution in which a single elevator system node may act as a switch or a repeater to another multi-drop ethernet bus segment to which nearby elevator system elements, for example, a call button or buttons, a display or displays, a destination operating panel or panels, a camera or cameras, a voice intercom device etc.

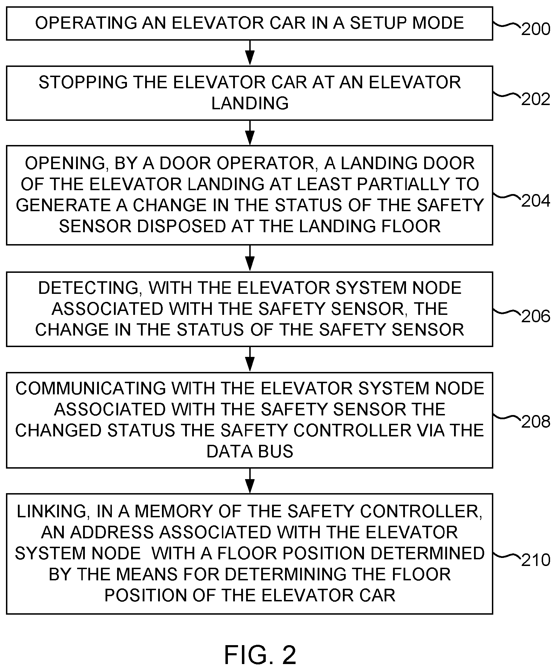

FIG. 2 illustrates a method for setting up an elevator safety system according to an example embodiment. The method may be implemented, for example, in the elevator communication system discussed in FIGS. 1A and 1B and their description.

A plurality of safety sensors may be disposed at different landing floors and configured to indicate a status of a landing door. Each of the plurality of elevator system nodes may associated with a safety sensor and configured to communicate the status of the safety sensor to the safety controller 114 via the data bus 114, 124. The elevator safety system further comprises means for determining a floor position of an elevator car. The means may refer, for example, to one or more sensors arranged in an elevator shaft and configured to determine the floor position of the elevator car.

The steps illustrated below may be repeated separately for each elevator landing.

At 200, the elevator car is operated in a setup mode. In the setup mode, the elevator controller 100 may be configured to operate the elevator car with a low velocity.

At 202, the elevator car is stopped, by the elevator controller 100, at an elevator landing.

At 204, the elevator controller 100 causes a door operator to open a landing door of the elevator landing at least partially to generate a change in the status of the safety sensor disposed at the landing floor. The landing door may be opened only to an amount that is enough to generate the status change. In another embodiment, the land door may be opened to its full extent.

At 206, the elevator system node associated with the safety sensor detects the change in the status of the safety sensor.

At 208, the elevator system node associated with the safety sensor communicates the changed status to the safety controller 104 via the data bus 114, 124. In addition to the changed status, the elevator system node communicates its address to the safety controller 104.

At 210 the safety controller 104 links in a memory of the safety controller 104, an address associated with the elevator system node with a floor position determined by the means for determining the floor position of the elevator car. When all landing floors have been gone through, the memory stores floor positions for all safety sensors. After this, when the same safety sensor provides status changes information again, the safety controller 104 knows the originating floor.

In an example embodiment, an elevator car may be accessed from two, opposite sides. In this case, the elevator controller 100 may first be configured to cause a door operator at one side to open a landing door, and then repeat the same to a door operator at the other side. This enables linking separate safety sensors in the same floor correctly.

At least some of the above discussed example embodiments enables a reliable solution to link floor control boards, in particular elevator safety nodes configured for reading landing door sensors, to physical landing doors in the memory of an elevator safety controller. Thus, a new kind of elevator safety system can be set up automatically, without need for manual configuration of the safety nodes. This speeds up the procedure, reduces work and removes the possibility of human error. Further, at least some of the above discussed example embodiments enables a solution that may alleviate the work of a service person, speeding up fault finding process and also enhancing elevator safety. It is also possible to provide more accurate information of elevator status to a remote service center or a maintenance server already before the service person has arrived to the elevator.

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein.

All or a portion of the example embodiments can be conveniently implemented using one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments can be implemented by the preparation of application-specific integrated circuits or by interconnecting an appropriate network of conventional component circuits, as will be appreciated by those skilled in the electrical art(s). Thus, the examples are not limited to any specific combination of hardware and/or software. Stored on any one or on a combination of computer readable media, the examples can include software for controlling the components of the example embodiments, for driving the components of the example embodiments, for enabling the components of the example embodiments to interact with a human user, and the like. Such computer readable media further can include a computer program for performing all or a portion (if processing is distributed) of the processing performed in implementing the example embodiments. Computer code devices of the examples may include any suitable interpretable or executable code mechanism, including but not limited to scripts, interpretable programs, dynamic link libraries (DLLs), Java classes and applets, complete executable programs, and the like. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, nonvolatile media, volatile media, transmission media, and the like.

While there have been shown and described and pointed out fundamental novel features as applied to preferred embodiments thereof, it will be understood that various omissions and substitutions and changes in the form and details of the devices and methods described may be made by those skilled in the art without departing from the spirit of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or embodiments may be incorporated in any other disclosed or described or suggested form or embodiment as a general matter of design choice.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features.

## Claims

1. A method for setting up an elevator safety system, the elevator safety system comprising means for determining a floor position of an elevator car, a data bus (114, 124), a safety controller (104) configured to communicate via the data bus (114, 124), a plurality of elevator system nodes (108A-108C, 110A-110F, 118A-118C, 120A-120I) configured to communicate via the data bus (114, 124), a plurality of safety sensors disposed at different landing floors and configured to indicate a status of a landing door, wherein each of the plurality of elevator system nodes (108A-108C, 110A-110F, 118A-118C, 120A-120I) is associated with a safety sensor and configured to communicate the status of the safety sensor to the safety controller (104) via the data bus (114, 124);
wherein the method comprises for each elevator landing:
a) operating the elevator car in a setup mode;
b) stopping the elevator car at an elevator landing;
c) opening, by a door operator, a landing door of the elevator landing at least partially to generate a change in the status of the safety sensor disposed at the landing floor;
d) detecting, with the elevator system node (108A-108C, 110A-110F, 118A-118C, 120A-120I) associated with the safety sensor, the change in the status of the safety sensor;
e) communicating with the elevator system node (108A-108C, 110A-110F, 118A-118C, 120A-120I) associated with the safety sensor the changed status to the safety controller (104) via the data bus (114, 124); and
f) linking, in a memory of the safety controller (104), an address associated with the elevator system node (108A-108C, 110A-110F, 118A-118C, 120A-120I) with a floor position determined by the means for determining the floor position of the elevator car, wherein when all landing floors have been gone through, the memory stores floor positions for all safety sensors.

2. The method of claim 1, wherein the data bus (114, 124) comprises an ethernet bus.

3. The method of claim 1, wherein the elevator communication system further comprises at least one multi-drop ethernet bus segment (106, 112A-112C, 122A-122C) communicatively connected to the data bus (114) and wherein the data bus (114) comprises a point-to-point ethernet bus, wherein at least one of the elevator system nodes (108A-108C, 110A-110F, 118A-118C, 120A-120I) is communicatively connected to the point-to-point ethernet bus (114) via the at least one multi-drop ethernet bus segment (106, 112A-112C, 122A-122C).

4. An elevator system for setting up an elevator safety system, the elevator safety system comprising:
means for determining a floor position of an elevator car;
a data bus (114, 124);
an elevator controller (100) configured to communicate via the data bus (114, 124);
a safety controller (104) configured to communicate via the data bus (114, 124);
a plurality of elevator system nodes (108A-108C, 110A-110F, 118A-118C, 120A-120I) configured to communicate via the data bus (114, 124);
a plurality of safety sensors disposed at different landing floors and configured to indicate a status of a landing door, wherein each of the plurality of elevator system nodes (108A-108C, 110A-110F, 118A-118C, 120A-120I) is associated with a safety sensor and configured to communicate the status of the safety sensor to the safety controller (104) via the data bus (114, 124);
wherein for each landing:
the elevator controller (100) is configured to operate the elevator car in a setup mode, stop the elevator car at an elevator landing and cause opening by a door operator of a landing door of the elevator landing at least partially to generate a change in the status of the safety sensor disposed at the landing floor;
the elevator system node (108A-108C, 110A-110F, 118A-118C, 120A-120I) associated with the safety sensor is configured to detect the change in the status of the safety sensor and communicate the changed status to the safety controller (104) via the data bus (114, 124); and
the safety controller (104) is configured to link in a memory of the safety controller (104) an address associated with the elevator system node (108A-108C, 110A-110F, 118A-118C, 120A-120I) with a floor position determined by the means for determining the floor position of the elevator car, wherein when all landing floors have been gone through, the memory stores floor positions for all safety sensors.

5. The elevator system of claim **4,** wherein the data bus (114, 124) comprises at least one multi-drop ethernet bus segment.

6. The elevator system of claim **4,** wherein the elevator communication system further comprises at least one multi-drop ethernet bus segment (106, 112A-112C, 122A-122C) communicatively connected to the data bus (114) and wherein the data bus (114) comprises a point-to-point ethernet bus, wherein at least one of the elevator system nodes (108A-108C, 110A-110F, 118A-118C, 120A-120I) is communicatively connected to the point-to-point ethernet bus (114) via the at least one multi-drop ethernet bus segment (106, 112A-112C, 122A-122C).

## Patentansprüche

1. Verfahren zum Einrichten eines Aufzugssicherheitssystems, wobei das Aufzugssicherheitssystem Mittel zum Bestimmen einer Stockwerksposition einer Aufzugskabine, einen Datenbus (114, 124), eine Sicherheitssteuerung (104), die dazu konfiguriert ist, über den Datenbus (114, 124) zu kommunizieren, eine Mehrzahl von Aufzugssystemknoten (108A-108C, 110A-110F, 118A-118C, 120A-120I), die dazu konfiguriert sind, über den Datenbus (114, 124) zu kommunizieren, eine Mehrzahl von Sicherheitssensoren, die an verschiedenen Haltestellenstockwerken angeordnet und dazu konfiguriert sind, einen Status einer Haltestellentür anzuzeigen, umfasst, wobei jeder der Mehrzahl von Aufzugssystemknoten (108A-108C, 110A-110F, 118A-118C, 120A-120I) einem Sicherheitssensor zugeordnet und dazu konfiguriert ist, den Status des Sicherheitssensors über den Datenbus (114, 124) an die Sicherheitssteuerung (104) zu kommunizieren;
wobei das Verfahren für jede Aufzugshaltestelle Folgendes umfasst:
a) Betreiben der Aufzugskabine in einem Einrichtungsmodus;
b) Anhalten der Aufzugskabine an einer Aufzugshaltestelle;
c) Öffnen, durch einen Türbetätiger, einer Haltestellentür der Aufzugshaltestelle zumindest teilweise, um eine Änderung des Status des an dem Haltestellenstockwerk angeordneten Sicherheitssensors zu erzeugen;
d) Detektieren, mit dem Aufzugssystemknoten (108A-108C, 110A-110F, 118A-118C, 120A-120I), der dem Sicherheitssensor zugeordnet ist, der Änderung des Status des Sicherheitssensors;
e) Kommunizieren mit dem Aufzugssystemknoten (108A-108C, 110A-110F, 118A-118C, 120A-120I), der dem Sicherheitssensor zugeordnet ist, des geänderten Status über den Datenbus (114, 124) an die Sicherheitssteuerung (104); und
f) Verknüpfen, in einem Speicher der Sicherheitssteuerung (104), einer Adresse, die dem Aufzugssystemknoten (108A-108C, 110A-110F, 118A-118C, 120A-120I) zugeordnet ist, mit einer Stockwerksposition, die durch die Mittel zum Bestimmen der Stockwerksposition der Aufzugskabine bestimmt wird, wobei, wenn alle Haltestellenstockwerke durchlaufen wurden, der Speicher Stockwerkspositionen für alle Sicherheitssensoren speichert.

2. Verfahren nach Anspruch 1, wobei der Datenbus (114, 124) einen Ethernet-Bus umfasst.

3. Verfahren nach Anspruch 1, wobei das Aufzugskommunikationssystem ferner mindestens ein Multi-Drop-Ethernet-Bussegment (106, 112A-112C, 122A-122C) umfasst, das kommunikativ mit dem Datenbus (114) verbunden ist, und wobei der Datenbus (114) einen Punkt-zu-Punkt-Ethernet-Bus umfasst, wobei mindestens einer der Aufzugssystemknoten (108A-108C, 110A-110F, 118A-118C, 120A-120I) über das mindestens eine Multi-Drop-Ethernet-Bussegment (106, 112A-112C, 122A-122C) kommunikativ mit dem Punkt-zu-Punkt-Ethernet-Bus (114) verbunden ist.

4. Aufzugssystem zum Einrichten eines Aufzugssicherheitssystems, wobei das Aufzugssicherheitssystem Folgendes umfasst:
Mittel zum Bestimmen einer Stockwerksposition einer Aufzugskabine;
einen Datenbus (114, 124);
eine Aufzugssteuerung (100), die dazu konfiguriert ist, über den Datenbus (114, 124) zu kommunizieren;
eine Sicherheitssteuerung (104), die dazu konfiguriert ist, über den Datenbus (114, 124) zu kommunizieren;
eine Mehrzahl von Aufzugssystemknoten (108A-108C, 110A-110F, 118A-118C, 120A-120I), die dazu konfiguriert sind, über den Datenbus (114, 124) zu kommunizieren;
eine Mehrzahl von Sicherheitssensoren, die an verschiedenen Haltestellenstockwerken angeordnet und dazu konfiguriert sind, einen Status einer Haltestellentür anzuzeigen, wobei jeder der Mehrzahl von Aufzugssystemknoten (108A-108C, 110A-110F, 118A-118C, 120A-1201) einem Sicherheitssensor zugeordnet und dazu konfiguriert ist, den Status des Sicherheitssensors über den Datenbus (114, 124) an die Sicherheitssteuerung (104) zu kommunizieren;
wobei für jede Haltestelle:
die Aufzugssteuerung (100) dazu konfiguriert ist, die Aufzugskabine in einem Einrichtungsmodus zu betreiben, die Aufzugskabine an einer Aufzugshaltestelle anzuhalten und ein Öffnen, durch einen Türbetätiger, einer Haltestellentür der Aufzugshaltestelle zumindest teilweise zu bewirken, um eine Änderung des Status des an dem Haltestellenstockwerk angeordneten Sicherheitssensors zu erzeugen;
der Aufzugssystemknoten (108A-108C, 110A-110F, 118A-118C, 120A-120I), der dem Sicherheitssensor zugeordnet ist, dazu konfiguriert ist, die Änderung des Status des Sicherheitssensors zu detektieren und den geänderten Status über den Datenbus (114, 124) an die Sicherheitssteuerung (104) zu kommunizieren; und
die Sicherheitssteuerung (104) dazu konfiguriert ist, in einem Speicher der Sicherheitssteuerung (104) eine Adresse, die dem Aufzugssystemknoten (108A-108C, 110A-110F, 118A-118C, 120A-120I) zugeordnet ist, mit einer Stockwerksposition zu verknüpfen, die durch die Mittel zum Bestimmen der Stockwerksposition der Aufzugskabine bestimmt wird, wobei, wenn alle Haltestellenstockwerke durchlaufen wurden, der Speicher Stockwerkspositionen für alle Sicherheitssensoren speichert.

5. Aufzugssystem nach Anspruch 4, wobei der Datenbus (114, 124) mindestens ein Multi-Drop-Ethernet-Bussegment umfasst.

6. Aufzugssystem nach Anspruch 4, wobei das Aufzugskommunikationssystem ferner mindestens ein Multi-Drop-Ethernet-Bussegment (106, 112A-112C, 122A-122C) umfasst, das kommunikativ mit dem Datenbus (114) verbunden ist, und wobei der Datenbus (114) einen Punkt-zu-Punkt-Ethernet-Bus umfasst, wobei mindestens einer der Aufzugssystemknoten (108A-108C, 110A-110F, 118A-118C, 120A-120I) über das mindestens eine Multi-Drop-Ethernet-Bussegment (106, 112A-112C, 122A-122C) kommunikativ mit dem Punkt-zu-Punkt-Ethernet-Bus (114) verbunden ist.

## Revendications

1. Procédé de configuration d'un système de sécurité d'ascenseur, le système de sécurité d'ascenseur comprenant des moyens pour déterminer une position à l'étage d'une cabine d'ascenseur, un bus de données (114, 124), un contrôleur de sécurité (104) conçu pour communiquer via le bus de données (114, 124), une pluralité de nœuds (108A-108C, 110A-110F, 118A-118C, 120A-120I) de système d'ascenseur conçus pour communiquer via le bus de données (114, 124), une pluralité de capteurs de sécurité disposés au niveau de différents étages de palier et conçus pour indiquer un état d'une porte palière, dans lequel chacun de la pluralité de nœuds (108A-108C, 110A-110F, 118A-118C, 120A-120I) de système d'ascenseur est associé à un capteur de sécurité et conçu pour communiquer l'état du capteur de sécurité au contrôleur de sécurité (104) via le bus de données (114, 124) ;
dans lequel le procédé comprend pour chaque palier d'ascenseur :
a) le fonctionnement de la cabine d'ascenseur dans un mode de configuration ;
b) l'arrêt de la cabine d'ascenseur à un palier d'ascenseur ;
c) l'ouverture, par un opérateur de porte, d'une porte palière du palier d'ascenseur au moins partiellement afin de générer un changement d'état du capteur de sécurité disposé au niveau de l'étage de palier ;
d) la détection, avec le nœud (108A-108C, 110A-110F, 118A-118C, 120A-120I) de système d'ascenseur associé au capteur de sécurité, du changement d'état du capteur de sécurité ;
e) la communication, avec le nœud (108A-108C, 110A-110F, 118A-118C, 120A-120I) de système d'ascenseur associé au capteur de sécurité, de l'état modifié au contrôleur de sécurité (104) via le bus de données (114, 124) ; et
f) la liaison, dans une mémoire du contrôleur de sécurité (104), d'une adresse associée au nœud (108A-108C, 110A-110F, 118A-118C, 120A-120I) de système d'ascenseur avec une position à l'étage déterminée par les moyens pour déterminer la position à l'étage de la cabine d'ascenseur, dans lequel lorsque tous les étages de palier ont été parcourus, la mémoire stocke les positions à l'étage pour tous les capteurs de sécurité.

2. Procédé selon la revendication 1, dans lequel le bus de données (114, 124) comprend un bus Ethernet.

3. Procédé selon la revendication 1, dans lequel le système de communication d'ascenseur comprend en outre au moins un segment de bus Ethernet multipoint (106, 112A-112C, 122A-122C) connecté de manière communicative au bus de données (114) et dans lequel le bus de données (114) comprend un bus Ethernet point à point, dans lequel au moins l'un des nœuds (108A-108C, 110A-110F, 118A-118C, 120A-120I) de système d'ascenseur est connecté de manière communicative au bus Ethernet point à point (114) via l'au moins un segment de bus Ethernet multipoint (106, 112A-112C, 122A-122C).

4. Système d'ascenseur pour configurer un système de sécurité d'ascenseur, le système de sécurité d'ascenseur comprenant :
des moyens pour déterminer une position à l'étage d'une cabine d'ascenseur ;
un bus de données (114, 124) ;
un contrôleur d'ascenseur (100) conçu pour communiquer via le bus de données (114, 124) ;
un contrôleur de sécurité (104) conçu pour communiquer via le bus de données (114, 124) ;
une pluralité de nœuds (108A-108C, 110A-110F, 118A-118C, 120A-120I) de système d'ascenseur conçus pour communiquer via le bus de données (114, 124) ;
une pluralité de capteurs de sécurité disposés au niveau de différents étages de palier et conçus pour indiquer un état d'une porte palière, dans lequel chacun de la pluralité de nœuds (108A-108C, 110A-110F, 118A-118C, 120A-120I) de système d'ascenseur est associé à un capteur de sécurité et conçu pour communiquer l'état du capteur de sécurité au contrôleur de sécurité (104) via le bus de données (114, 124) ;
dans lequel pour chaque palier :
le contrôleur d'ascenseur (100) est conçu pour faire fonctionner la cabine d'ascenseur dans un mode de configuration, arrêter la cabine d'ascenseur au niveau d'un palier d'ascenseur et provoquer l'ouverture par un opérateur de porte d'une porte palière du palier d'ascenseur au moins partiellement pour générer un changement d'état du capteur de sécurité disposé au niveau de l'étage de palier ;
le nœud (108A-108C, 110A-110F, 118A-118C, 120A-1201) de système d'ascenseur associé au capteur de sécurité est conçu pour détecter le changement d'état du capteur de sécurité et communiquer le changement d'état au contrôleur de sécurité (104) via le bus de données (114, 124) ; et
le contrôleur de sécurité (104) est conçu pour relier dans une mémoire du contrôleur de sécurité (104) une adresse, associée au nœud (108A-108C, 110A-110F, 118A-118C, 120A-120I) de système d'ascenseur, à une position à l'étage déterminée par les moyens pour déterminer la position à l'étage de la cabine d'ascenseur, dans lequel lorsque tous les étages de palier ont été parcourus, la mémoire enregistre les positions à l'étage pour tous les capteurs de sécurité.

5. Système d'ascenseur selon la revendication 4, dans lequel le bus de données (114, 124) comprend au moins un segment de bus Ethernet multipoint.

6. Système d'ascenseur selon la revendication 4, dans lequel le système de communication d'ascenseur comprend en outre au moins un segment de bus Ethernet multipoint (106, 112A-112C, 122A-122C) connecté de manière communicative au bus de données (114) et dans lequel le bus de données (114) comprend un bus Ethernet point à point, dans lequel au moins l'un des nœuds (108A-108C, 110A-110F, 118A-118C, 120A-120I) de système d'ascenseur est connecté de manière communicative au bus Ethernet point à point (114) via l'au moins un segment de bus Ethernet multipoint (106, 112A-112C, 122A-122C).
